# EUROPÄISCHE PATENTANMELDUNG

(11) **EP 4 407 275 A1**
(43) Veröffentlichungstag der Anmeldung: **31.07.2024**
(21) Anmeldenummer: 24151820.8
(22) Anmeldetag: 15.01.2024
(51) Int. Cl.: G01B 11/24

(54) **SENSORSYSTEM UND VERFAHREN ZUM BETRIEB EINES SENSORSYSTEMS**

(30) Priorität: 27.01.2023 DE 102023101972
(71) Anmelder: Krebs, Matthias, 73105 Dürnau (DE)
(72) Erfinder: Krebs, Matthias, 73105 Dürnau (DE)
(74) Vertreter: Ruckh, Rainer Gerhard

(57) **Zusammenfassung**

Die Erfindung betrifft ein Sensorsystem (1) mit einer Messeinheit (6), welche entlang einer Bahn geführt ist. In unterschiedlichen Positionen erfasst die Messeinheit (6) verschiedene Bereiche eines Objekts. Mit einer Steuer- und Auswerteeinheit (12) werden mit der Messeinheit (6) generierte Sensorsignale ausgewertet. Mittels eines IPS-Systems (9) werden die Positionen der Messeinheit (6) erfasst. In der Steuer- und Auswerteeinheit (12) werden die Sensorsignale der Messeinheit (6) abhängig von deren mit dem IPS-System (9) erfassten Positionen ausgewertet.

## Beschreibung

Die Erfindung betrifft ein Sensorsystem und ein Verfahren zum Betrieb eines Sensorsystems.

Derartige Sensorsysteme werden im Bereich der Messtechnik eingesetzt. Das Sensorsystem weist hierzu eine geeignete Messeinheit auf. Diese Messeinheit kann beispielsweise von einem Kamerasystem gebildet sein, mit welchem Bilder von einem zu vermessenden Objekt aufgenommen werden. Je nach Anforderungen können mit dem Kamerasystem 2D- oder 3D-Bilddaten aufgenommen werden.

Diese Sensorsysteme werden typischerweise in Fertigungsumgebungen eingesetzt. Zu fertigende Bauteile werden als Objekte mit der Messeinheit, insbesondere mit dem Kamerasystem, vermessen, um so prüfen zu können, ob die Bauteile fehlerfrei sind und ob diese vorgegebenen Spezifikationen genügen.

Ein Problem hierbei besteht darin, dass bei der Vermessung großer Bauteile der Messbereich der Messeinheit nur einen Teilbereich des Bauteils abdeckt. Die Messeinheit muss daher sukzessive gegenüber dem Bauteil verschoben werden, so dass dann mit der Messeinheit verschiedene Bereiche des Bauteils erfasst werden. In der zur Auswertung der Signale der Messeinheit vorgesehenen Steuer- und Auswerteeinheit werden dann Messwerte der verschiedenen Bereiche zusammengesetzt, um so ein Messwertergebnis für das gesamte Bauteil zu erhalten.

Ein wesentliches Problem besteht dabei darin, dass in der Steuer- und Auswerteeinheit die Positionen der einzelnen Bereiche mit Messwerten, die mit der Messeinheit erfasst werden, bekannt sein müssen, damit diese in der Steuer- und Auswerteeinheit positionsgenau zusammengesetzt werden können, um so ein korrektes, vollständiges Messwertergebnis für das gesamte Bauteil zu erhalten.

Bei einer Messeinheit in Form eines Kamerasystems werden in den einzelnen Positionen des Kamerasystems unterschiedliche Teilbilder von dem zu vermessenden Bauteil aufgenommen. Um diese Teilbilder positionsgenau zusammensetzen zu können, werden an dem Bauteil Messmarken angebracht, die als Positionsmarken vom Kamerasystem erkannt werden. Anhand dieser Messmarken, die in den aufgenommenen Teilbildern sichtbar sind, können die Teilbilder positionsgenau zu einem Gesamtbild des Bauteils zusammengefasst werden.

Nachteilig hierbei ist, dass die Anbringung der Messmarken an dem Bauteil äußerst umständlich und zeitaufwändig ist. Zudem ist die Anbringung der Messmarken fehleranfällig, da diese positionsgenau an Sollstellen am Bauteil anzubringen sind. Letztlich verdecken die Messmarken auch einzelne Stellen des Bauteils, so dass dieses nicht vollständig geprüft werden kann.

Der Erfindung liegt die Aufgabe zugrunde, ein Sensorsystem bereitzustellen, mittels dessen eine genaue Vermessung von Objekten ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Sensorsystem mit einer Messeinheit, welche entlang einer Bahn geführt ist. In unterschiedlichen Positionen erfasst die Messeinheit verschiedene Bereiche eines Objekts. Mit einer Steuer- und Auswerteeinheit werden mit der Messeinheit generierte Sensorsignale ausgewertet. Mittels eines IPS-Systems werden die Positionen der Messeinheit erfasst und in der Steuer- und Auswerteeinheit die Sensorsignale der Messeinheit abhängig von deren mit dem IPS-System erfassten Positionen ausgewertet.

Die Erfindung betrifft auch ein entsprechendes Verfahren.

Das erfindungsgemäße Sensorsystem umfasst eine Messeinheit, mit der ein Objekt, wie z.B. ein Bauteil, hochgenau vermessen werden kann.

Die Messeinheit weist generell einen räumlich begrenzten Messbereich auf, innerhalb dessen die Messeinheit das Objekt erfasst und dabei entsprechende Messwerte generiert.

Erfindungsgemäß können mit dem Sensorsystem auch Objekte erfasst werden, die erheblich größer sind als der Messbereich der Messeinheit.

Hierzu wird die Messeinheit entlang einer definierten Bahn bewegt. In unterschiedlichen Positionen nimmt dabei die Messeinheit Messwerte vom Objekt auf, wobei in diesen unterschiedlichen Positionen unterschiedliche Bereiche des Objekts erfasst werden.

Erfindungsgemäß weist das Sensorsystem ein IPS-System auf, mit dem zeitaufgelöst die aktuelle Position der Messeinheit erfasst wird, d.h. mit dem IPS-System erfolgt ein Tracking der Messeinheit.

Der Steuer- und Auswerteeinheit des Sensorsystems werden sowohl die Messwerte der Messeinheit, als auch die Positionswerte des IPS-Systems zugeführt. Wesentlich hierbei ist, dass für jede Position, in der die Messeinheit Messwerte generiert, das IPS-System diese Position der Messeinheit erfasst.

Damit sind alle Positionen, in denen mit der Messeinheit Messwerte generiert werden, vom IPS-System erfasst und in der Steuer- und Auswerteeinheit hinterlegt und den jeweiligen Messwerten zugeordnet.

Erfindungsgemäß werden dann in der Steuer- und Auswerteeinheit die Messwerte der Messeinheit abhängig von den mit dem IPS-System erfassten Positionen der Messeinheit ausgewertet.

Dabei werden in der Steuer- und Auswerteeinheit die in unterschiedlichen Positionen generierten Messwerte mit den zugeordneten Positionswerten des IPS-Systems zu einer Gesamtdarstellung des Objekts kombiniert.

Dadurch kann das Objekt in seiner Gesamtheit hochgenau und ohne Verwendung von Messmarken erfasst werden. Die Genauigkeit der Objekterfassung liegt vorteilhaft im Bereich von 0,1 mm.

Insbesondere umfasst die Gesamtdarstellung des Objekts die Geometrie und/oder Struktur dessen Oberfläche.

Vorteilhaft weist das IPS-System mehrere stationär angeordnete IPS-Module auf.

Die IPS-Module sind in vorgegebenen, im IPS-System bekannten Distanzen stationär miteinander angeordnet, so dass durch Triangulation die Positionen der Messeinheit bestimmt werden können.

Vorteilhaft sind die IPS-Module zum Senden und Empfangen von Funksignalen ausgebildet.

Korrespondierend hierzu weist die Messeinheit einen IPS-Empfänger auf.

Das IPS-System kann dabei mit Ultrabreitbandsignalen aber auch WIFI- oder Bluetooth-Signalen arbeiten. Die Messeinheit kann durch Empfang von Funksignalen des IPS-Systems identifiziert und hochgenau lokalisiert werden.

Vorteilhaft bildet der IPS-Empfänger eine Sende-Empfangseinheit, die auf empfangene Funksignale entsprechende Antwortsignale an die IPS-Module zurücksendet.

Prinzipiell kann das Sensorsystem eine taktile Messeinheit aufweisen.

Gemäß einer vorteilhaften Ausführungsform ist die Messeinheit von einem Kamerasystem gebildet.

Dabei weist das Kamerasystem ein oder mehrere Kameramodule auf.

Für den Fall, dass das Kamerasystem mehrere Kameramodule umfasst, sind die Kameramodule in fester, unveränderlicher, räumlicher Anordnung zueinander angeordnet.

Jedes Kameramodul weist in bekannter Weise einen Bildsensor auf, der eine zeilen- oder matrixförmige Anordnung von Empfangselementen aufweist. Vorteilhaft ist dem Bildsensor eine Beleuchtungseinheit oder eine Lichtstrahlen emittierende Sendereinheit zugeordnet.

Mit dem Kamerasystem werden vorteilhaft 2D- oder 3D-Bilddaten des zu erfassenden Objekts gewonnen.

Um 3D-Bilddaten zu gewinnen, können zwei Kameramodule in festem, bekanntem Abstand zueinander eine Steuerkamera ausbilden.

Alternativ können auch mit einem einzelnen Kameramodul 3D-Bilddaten gewonnen werden. Das Kameramodul bildet dann eine ToF (time of fight) -Kamera. Das Kameramodul weist dann einen Bildsensor mit einer matrixförmigen Anordnung von Empfangslichtstrahlen und eine Sendereinheit mit einem Laser, der Lichtimpulse emittiert, auf. Mit diesem Kameramodul erfolgt für alle Empfangselemente eine Distanzmessung nach einem Impuls-Laufzeit-Verfahren, in dem die Lichtlaufzeiten von Lichtimpulsen, die von der Sendereinheit emittiert und von einem Objekt zurück zum Kameramodul reflektiert werden, bestimmt werden.

Die Steuer- und Auswerteeinheit dient zur Steuerung der Komponenten des Sensorsystems und ist mit diesem über vorzugsweise berührungslos arbeitende Schnittstellenmodulen, insbesondere Funkschnittstellen verbunden, wobei über diese eine bidirektionale Datenübertragung erfolgt. Weiterhin werden in der Steuer- und Auswerteeinheit in der Messeinheit generierte Messwerte und im IPS-System generierte Positionssignale ausgewertet. Schließlich weist die Steuer- und Auswerteeinheit eine Ein-/Ausgabeeinheit zur Dateneingabe zur Ausgabe und Anzeige von Ausgangssignalen auf.

Die Steuer- und Auswerteeinheit ist eine lokale Rechnereinheit, die in enger, räumlicher Zuordnung zur Messeinheit und zum IPS-System angeordnet ist. Die Steuer- und Auswerteeinheit kann beispielsweise von einem Server oder einem Mikroprozessorsystem ausgebildet sein.

Vorteilhaft erfolgt die Auswertung der Messwerte der Messeinheit und des IPS-Systems in Echtzeit, so dass kurze Antwortzeiten bei der Signalauswertung erhalten werden.

Die Erfindung wird im Folgenden anhand der Zeichnungen erläutert. Es zeigen:
- Figur 1:: Schematische Darstellung eines Ausführungsbeispiels des erfindungsgemäßen Sensorsystems.
- Figur 2:: Beispiel einer Messeinheit des Sensorsystems gemäß Figur 1.

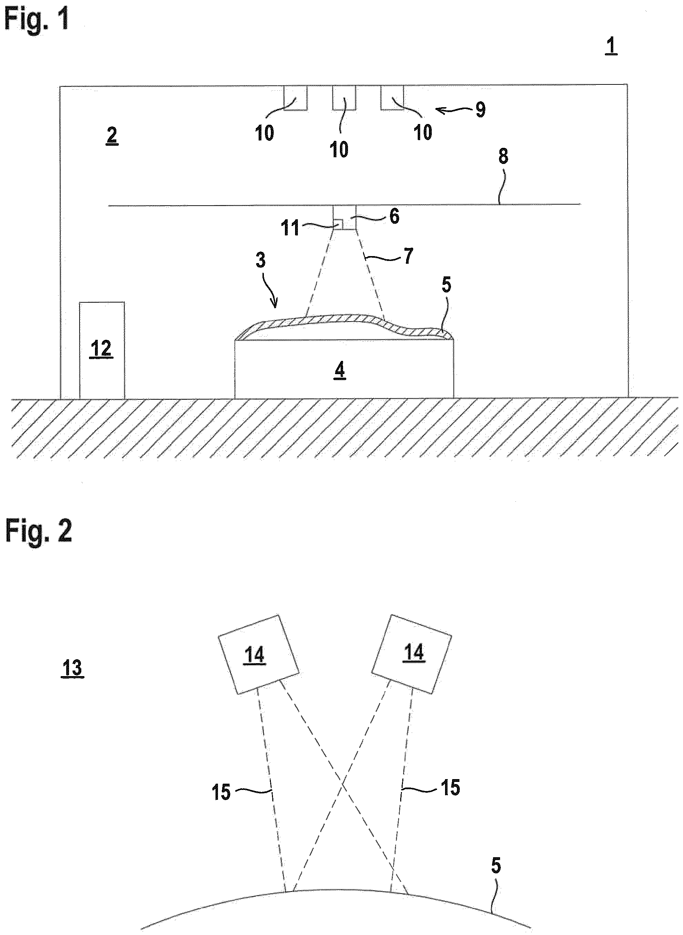

Figur 1 zeigt stark schematisiert ein Ausführungsbeispiel des erfindungsgemäßen Sensorsystems 1.

Die Komponenten des Sensorsystems 1 sind in einem Innenraum 2 eines Gebäudes installiert.

Das Sensorsystem 1 dient zur Vermessung von Objekten, insbesondere von Objektoberflächen derartiger Objekte.

Hierzu ist in dem Innenraum 2 eine Messeinrichtung 3 mit einer Objekthalterung 4, auf welcher das Objekt gelagert ist, vorgesehen. Das Objekt besteht im vorliegenden Fall aus einem Bauteil 5, wie z.B. einem Karosseriebauteil, das auf der Oberseite der Objekthalterung 4 gelagert ist.

Das Sensorsystem 1 umfasst eine Messeinheit 6, mittels derer eine Erfassung des Bauteils durchgeführt werden. Die Messeinheit 6 weist einen räumlich begrenzten Messbereich 7 auf, innerhalb dessen die Messeinheit 6 Objekte bzw. Objektstrukturen erfassen kann.

Wie aus Figur 1 ersichtlich, ist der Messbereich 7 der Messeinheit 6 erheblich kleiner als die zu detektierende Oberfläche des Bauteils, d.h. mit dem Messbereich 7 der Messeinheit 6 wird nur ein Teilbereich des Bauteils erfasst.

Um mit der Messeinheit 6 das gesamte Bauteil erfassen zu können, ist die Messeinheit 6 an Führungsmitteln 8 gelagert, so dass die Messeinheit 6 entlang einer Bahn verfahren werden kann. Je nach Ausbildung der Führungsmittel 8 kann die Messeinheit 6 entlang einer linearen Bahn, einer Bahn innerhalb einer Ebene oder einer Bahn in einem dreidimensionalen Raum verfahren werden.

Das Sensorsystem 1 umfasst weiterhin ein IPS-System 9 mit mehreren IPS-Modulen 10, die in fester, bekannter, räumlicher Zuordnung zueinander stationär an der Decke angeordnet sind.

Die IPS-Module 10 sind zum Senden und Empfangen von Funksignalen ausgebildet.

Über Triangulationsmessungen können mit dem IPS-System 9 die Positionen von Objekten bestimmt werden. Im vorliegenden Fall wird mit dem IPS-System 9 die Position der Messeinheit 6 bestimmt.

Vorteilhaft ist in der Messeinheit 6 ein IPS-Empfänger 11 integriert. Der IPS-Empfänger 11 ist dabei zweckmäßig als Sende-Empfangseinheit ausgebildet, so dass er Funksignale vom IPS-System 9 empfangen und an dieses senden kann.

Im IPS-Empfänger 11 kann eine Objekt-ID gespeichert sein, anhand derer die Messeinheit 6 eindeutig identifiziert werden kann. Dies ist dann zweckmäßig, wenn das Sensorsystem 1 mehrere Messeinheiten 6 an mehreren Messeinrichtungen 3 aufweist. Dann können die Messeinheiten 6 eindeutig voneinander unterschieden werden.

Weiterhin befindet sich in dem Innenraum 2 eine Steuer- und Auswerteeinheit 12 als weiteren Bestandteil des Sensorsystems 1. Die Steuer- und Auswerteeinheit 12 ist von einer lokalen Rechnereinheit, wie einem Server oder einem Mikroprozessorsystem gebildet. Die Steuer- und Auswerteeinheit 12 kommuniziert mit der Messeinheit 6 und dem IPS-System 9 über berührungslos arbeitende Schnittstellenmodule, die insbesondere in Form von Funkverbindungen ausgebildet sind.

Die Messeinheit 6 kann prinzipiell als taktile Messeinheit 6 ausgebildet sein.

Im vorliegenden Fall ist die Messeinheit 6 von einem Kamerasystem 13 gebildet. Ein Beispiel hierfür zeigt Figur 2.

Das Kamerasystem 13 umfasst in diesem Fall zwei Kameramodule 14.

Jedes Kameramodul 14 weist in bekannter Weise einen Bildsensor auf, der eine zeilen- oder matrixförmige Anordnung von Empfangselementen aufweist. Vorteilhaft ist dem Bildsensor eine Beleuchtungseinheit oder eine Lichtstrahlen emittierende Sendereinheit zugeordnet.

Mit dem Kamerasystem 13 gemäß Figur 2 werden vorteilhaft 3D-Bilddaten des zu erfassenden Bauteils gewonnen.

Die Kameramodule 14 sind derart angeordnet, dass sich deren Lichtbereiche 15 im Bereich der Oberfläche des Bauteils 5 schneiden. Die Kameramodule 14 bilden so eine Stereokamera, die dreidimensionale Bilddaten liefert.

Alternativ können auch mit einem einzelnen Kameramodul 14 3D-Bilddaten gewonnen werden. Das Kameramodul 14 bildet dann eine ToF (time of fight) - Kamera. Das Kameramodul 14 weist dann einen Bildsensor mit einer matrixförmigen Anordnung von Empfangslichtstrahlen und eine Sendereinheit mit einem Laser, der Lichtimpulse emittiert, auf. Mit diesem Kameramodul 14 erfolgt für alle Empfangselemente eine Distanzmessung nach einem Impuls-Laufzeit-Verfahren, in dem die Lichtlaufzeiten von Lichtimpulsen, die von der Sendereinheit emittiert und von einem Objekt zurück zum Kameramodul 14 reflektiert werden, bestimmt werden.

Die Funktionsweise des erfindungsgemäßen Sensorsystems 1 ist derart, dass die Messeinheit 6 entlang der Bahn in unterschiedliche Positionen relativ zum Bauteil 5 eingefahren wird. Jede dieser Positionen wird mit dem IPS-System 9 erfasst. Die erfassten Positionen werden vom IPS-System 9 in die Steuer- und Auswerteeinheit 12 eingelesen. In jeder Position der Messeinheit 6 wird mit deren Messbereich 7 ein Teilbereich des Bauteils 5 erfasst. Die dabei generierten Messwerte werden von der Messeinheit 6 in die Steuer- und Auswerteeinheit 12 eingelesen und dort mit dem zugehörigen Positionswert des IPS-Systems 9 verknüpft.

Die Messeinheit 6 wird solange entlang verfahren, bis mit dieser das gesamte Bauteil 5 erfasst wurde.

In der Steuer- und Auswerteeinheit 12 liegt dann eine Folge von Messwerten vor, denen jeweils eine Position der Messeinheit 6, in der die jeweiligen Messwerte aufgenommen wurden, zugeordnet ist.

In der Steuer- und Auswerteeinheit 12 wird anhand der zugeordneten Positionswerte die Folge der Messwerte positionsgetreu zu einer Gesamtdarstellung des Bauteils 5 verknüpft. Für den Fall, dass die Messeinheit 6 ein Kamerasystem 13, wie in Figur 2 dargestellt, ist, wird als Gesamtdarstellung ein dreidimensionales Bild des Bauteils 5 erhalten, anhand dessen das gesamte Bauteil 5 analysiert und geprüft werden kann.

### Bezugszeichenliste

- (1): Sensorsystem
- (2): Innenraum
- (3): Messeinrichtung
- (4): Obj ekthalterung
- (5): Bauteil
- (6): Messeinheit
- (7): Messbereich
- (8): Führungsmittel
- (9): IPS-System
- (10): IPS-Modul
- (11): IPS-Empfänger
- (12): Steuer- und Auswerteeinheit
- (13): Kamerasystem
- (14): Kameramodul
- (15): Lichtbereich

## Patentansprüche

1. Sensorsystem (1) mit einer Messeinheit (6), welche entlang einer Bahn geführt ist, wobei in unterschiedlichen Positionen die Messeinheit (6) verschiedene Bereiche eines Objekts erfasst, und mit einer Steuer- und Auswerteeinheit (12), in welcher mit der Messeinheit (6) generierte Sensorsignale ausgewertet werden, **dadurch gekennzeichnet, dass** ein IPS-System (9) vorhanden ist, mittels dessen Positionen der Messeinheit (6) erfasst werden, und dass in der Steuer- und Auswerteeinheit (12) die Sensorsignale der Messeinheit (6) abhängig von deren mit dem IPS-System (9) erfassten Positionen ausgewertet werden.

2. Sensorsystem (1) nach Anspruch 1, **dadurch gekennzeichnet, dass** das IPS-System (9) mehrere stationär angeordnete IPS-Module (10) aufweist.

3. Sensorsystem (1) nach Anspruch 2, **dadurch gekennzeichnet, dass** die IPS-Module (10) zum Senden und Empfangen von Funksignalen ausgebildet sind.

4. Sensorsystem (1) nach einem der Ansprüche 1 bis 3, **dadurch gekennzeichnet, dass** die Messeinheit (6) einen IPS-Empfänger (11) aufweist.

5. Sensorsystem (1) nach einem der Ansprüche 1 bis 4, **dadurch gekennzeichnet, dass** die Messeinheit (6) von einem Kamerasystem (13) gebildet ist.

6. Sensorsystem (1) nach Anspruch 5, **dadurch gekennzeichnet, dass** das Kamerasystem (13) ein oder mehrere Kameramodule (14) aufweist.

7. Sensorsystem (1) nach Anspruch 6, **dadurch gekennzeichnet, dass** die Kameramodule (14) in fester, unveränderlicher, räumlicher Anordnung zueinander angeordnet sind.

8. Sensorsystem (1) nach einem der Ansprüche 5 bis 7, **dadurch gekennzeichnet, dass** mit dem Kamerasystem (13) 2D- oder 3D-Bilddaten generiert werden.

9. Sensorsystem (1) nach einem der Ansprüche 1 bis 4, **dadurch gekennzeichnet, dass** eine taktile Messeinheit (6) vorhanden ist.

10. Sensorsystem (1) nach einem der Ansprüche 1 bis 9, **dadurch gekennzeichnet, dass** die Steuer- und Auswerteeinheit (12) eine lokale Rechnereinheit ist.

11. Sensorsystem (1) nach einem der Ansprüche 1 bis 10, **dadurch gekennzeichnet, dass** die Auswertung der Steuer- und Auswerteeinheit (12) in Echtzeit erfolgt.

12. Sensorsystem (1) nach einem der Ansprüche 1 bis 11, **dadurch gekennzeichnet, dass** mit der Messeinheit (6) in unterschiedlichen Positionen generierten Messwerten in der Steuer- und Auswerteeinheit (12) jeweils die aktuell mit dem IPS-System (9) ermittelte Positionen zugeordnet wird.

13. Sensorsystem (1) nach Anspruch 12, **dadurch gekennzeichnet, dass** in der Steuer- und Auswerteeinheit (12) die in unterschiedlichen Positionen generierten Messwerte der Messeinheit (6) mit den zugeordneten Positionswerten des IPS-Systems (9) zu einer Gesamtdarstellung des Objekts kombiniert werden.

14. Sensorsystem (1) nach Anspruch 13, **dadurch gekennzeichnet, dass** die Gesamtdarstellung des Objekts die Geometrie und/oder Struktur dessen Oberfläche umfasst.

15. Verfahren zum Betrieb eines Sensorsystems (1) mit einer Messeinheit (6), welche entlang einer Bahn geführt ist, wobei in unterschiedlichen Positionen die Messeinheit (6) verschiedene Bereiche eines Objekts erfasst, und mit einer Steuer- und Auswerteeinheit (12), in welcher mit der Messeinheit (6) generierte Sensorsignale ausgewertet werden, **dadurch gekennzeichnet, dass** ein IPS-System (9) vorhanden ist, mittels dessen Positionen der Messeinheit (6) erfasst werden, und dass in der Steuer- und Auswerteeinheit (12) die Sensorsignale der Messeinheit (6) abhängig von deren mit dem IPS-System (9) erfassten Positionen ausgewertet werden.
